# EUROPEAN PATENT APPLICATION

(11) **EP 0 583 723 A1**
(43) Date of publication of application: **23.02.1994**
(21) Application number: 93112842.5
(22) Date of filing: 11.08.1993
(51) Int. Cl.: G06K 7/00, G06K 19/07

(54) **Card, card reader and method for protocol selection**

(30) Priority: 20.08.1992 EP 92402313
(71) Applicant: THOMSON multimedia, 92400 Courbevoie (FR)
(72) Inventor: Naccache, David, F-94700 Maisons-Alfort (FR); Fremanteau, Patrice, F-67100 Strasbourg (FR); Hartnack, Wolfgang, D-31303 Burgdorf (DE)
(74) Representative: Einsel, Robert, Dipl.-Ing.

(57) **Abstract**

In a lot of cases memory-cards or smart-cards operate with two protocols, whereby the first protocol informs the smart-card reader of the kind of the second protocol.
If the smart-card reader is equipped with a sequence of light emitting diodes and photoreceptors, and holes (11) coding the protocol type are done in the plastic support (12) of the card, direct operating with the second protocol is possible. When a card is inserted into the reader, the photoreceptors detect the existence or the absence of the said holes and transmits to the reader this information. The geometrical position of the holes directly codes the protocol type(s) that the card supports and the communication is initiated directly according to the said protocol(s).

## Description

The present invention relates to a card, to a card reader and to a method for protocol selection.

### Background

The existing communication standards for smart-cards (mainly the ISO 7816-X family of asynchronous standards) impose that at least a basic protocol called T=0 has to be implemented in each smart-card.
This basic T=0 is a relatively lengthy protocol wherein the card is always slave and the reader is master. A byte is communicated by the sending of 10 bits (a start bit, the 8 information bits and a parity bit) plus a guard time of two bits between each couple of bytes.
When a card is inserted into a reader (eg. a cash delivery machine, a pay-TV decoder etc), both sides firstly begin to interact according to the protocol T=0. If the card supports a faster T=0 or a different protocol, then both sides switch to the second protocol by the means of a Protocol Type Selection (PTS) procedure (described in the ISO standard 7816-3) thereby abandoning the initial transmission rate and/or the T=0 protocol and initiating a new communication according to the new protocol which parameters were transmitted during the PTS between the two parties.

### Invention

This standard procedure has the big inconvenience that cards aimed to work in non-T=0 or faster T=0 protocols have to support whatsoever the initial low-rate T=0 protocol just for being able to exchange the parameters of the new protocol with the reader. Such a solution suffers from the disadvantage that the implementation of the T=0 has to be done in the card (about 500 bytes of code) where PROM space is very limited.

It is one object of the invention to disclose a card which does not need a start-up protocol. This object is reached by the card disclosed in claim 1.

It is a further object of the invention to disclose a respective card reader. This object is reached by the card reader disclosed in claim 4.

It is a further object of the invention to disclose a method for protocol selection which utilises the inventive card and card reader. This object is reached by the method disclosed in claim 7.

In the inventive card and card reader system, which still remains ISO compatible, the need to implement such a double protocol can be overcome.
Each reader is equipped with detector means, e.g. an array of light emitting diodes and a respective array of photoreceptors, or alternatively, with electromechanical means for detecting holes in a well-defined geometrical sector of the plastic support of the card.
Marks, e.g. holes or reflecting areas, are done in or on the plastic support of the cards in order to encode the protocol type supported by the card. If there are no marks (or vice-versa), the reader considers the card as an ISO 7816-3 card and applies to it the pure ISO procedure.
If, on the other hand, marks were detected the reader will initiate directly the dialog in the protocol thereby coded.
The reflecting areas can be made from robust paint (silver, gold, copper) or can be sheltered by lacquer.

When a card is inserted into the card reader, the detectors (photoreceptors) detect the existence or the absence or the distribution of the marks and transmit this information to evaluation means in the reader. The geometrical position or number of the marks codes the protocol type(s) that the card supports and the communication is initiated directly according to the said protocol(s).

In principle the inventive card includes in a plastic support a chip with memory means, in which protocols for communicating with a card reader are stored, whereby said card has for coding a kind of said protocol marks on or in it, the distribution and/or number of which is detected in said card reader for selecting an respective operation mode for communicating with said chip.

Advantageous additional embodiments of the inventive card are resulting from the respective dependent claims.

In principle the inventive card reader includes a card-chip reader for communicating with the chip of said card using a protocol and a light emitting source, the light of which is controlled by marks of said card and received by light detecting means, whereby the kind of protocol for communicating with said chip is selected accordingly.

Advantageous additional embodiments of the inventive card reader are resulting from the respective dependent claims.

In principle the inventive method is suitable for protocol selection between a such card and a card reader, whereby at least one kind of protocol is stored in memory means of said card and said card reader communicates with said memory means using said protocol/s, whereby:
- when inserting the card into said card reader the type of protocol for communicating with said card is detected by identifying the distribution and/or number of marks on or in said card using a light emitting source, the light of which is controlled by said marks and received by light detecting means;
- the kind of protocol for communicating with said memory means is selected according to said distribution and/or number.

Advantageous additional embodiments of the inventive method are resulting from the respective dependent claims.

### Drawings

Preferred embodiments of the invention are described with reference to the accompanying drawings, which show in:
- Fig. 1: structure of the inventive smart-card;
- Fig. 2: structure of the inventive card reader.

### Preferred embodiments

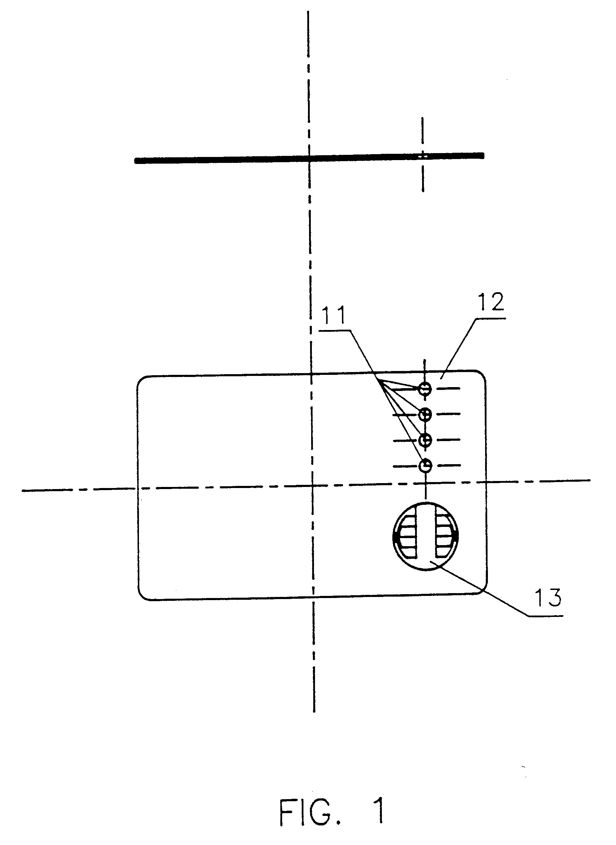

The memory-card or smart-card in Fig. 1 contains within its plastic support 12 a chip 13 and marks 11, e.g. four holes or reflective areas which code protocol selection information.
The number of marks is preferably in the range of 1 to 8.

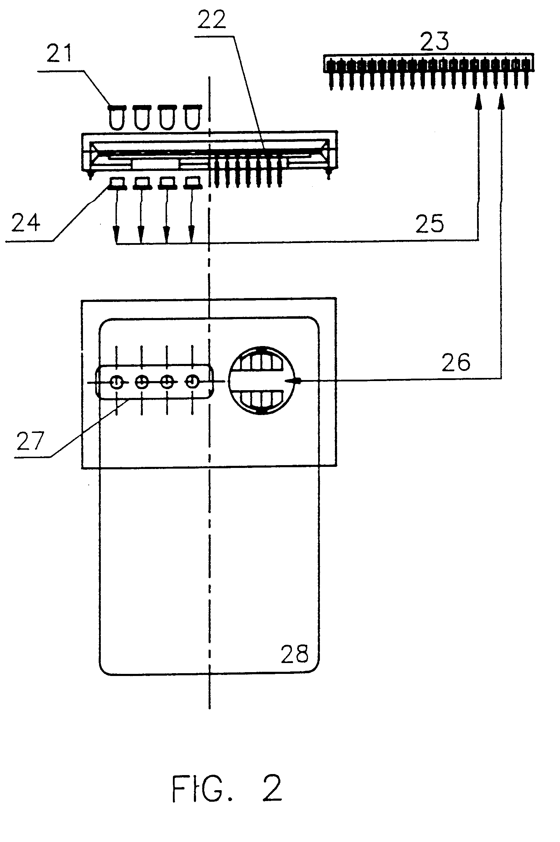

In Fig. 2 the card 28 is inserted into a reader. In this reader can be a hole 27 through which the light of light emitting diodes 21 or of any other light source(s) passes, received by accordingly arranged photoreceptors 24. The reader contains also a smart card chip reader 22. The output signals of the photoreceptors transmit a protocol type code 25 to a microprocessor 23, which can operate accordingly with data 26 stored in the chip 13 of the card 28.
If the marks of the card are reflecting areas, the photo-receptors 24 are located at the light source side of the reader.
The light source and the photoreceptors can be replaced by respective electromechanical means, e.g. an array of conductor springs throughout the card's holes.

The inventive smart-cards or memory-cards can be produced cheaper (less PROM memory) than existing cards and can be used e.g. for pay TV and banking purposes.

Also more memory can be dedicated for the actual application.

## Claims

1. Card (28) including in a plastic support (12) a chip (13) with memory means, in which protocols for communicating with a card reader are stored, **characterized in** that said card has for coding a kind of said protocol marks (11) on or in it, the distribution and/or number of which is detected in said card reader for selecting an respective operation mode for communicating with said chip (13).

2. Card according to claim 1, **characterized in** that said marks (11) are holes and/or reflecting areas.

3. Card according to claim 1 or 2, **characterized in** that the absence - or presence - of said marks (11) indicates a purely ISO compatible kind of said card.

4. Card reader (22) for a card (28) according to any of claims 1 to 3, which includes a card-chip reader (22) for communicating with the chip (13) of said card using a protocol, **characterized in** that said card reader includes also a light emitting source (21), the light of which is controlled by marks (11) of said card and received by light detecting means (24), whereby the kind of protocol for communicating with said chip is selected accordingly.

5. Reader according to claim 4, **characterized in** that said light emitting source (21) and/or said light detecting means (24) are in array form.

6. Reader according to claim 4 or 5, **characterized in** that said light emitting source (21) and said light detecting means (24) are replaced by respective electromechanical means - especially an array of conductor springs throughout the holes.

7. Method for protocol selection between a card according to any of claims 1 to 3 and a card reader according to any of claims 4 to 6, whereby at least one kind of protocol is stored in memory means (in 13) of said card (28) and said card reader communicates with said memory means using said protocol/s, **characterized in** that:
- when inserting the card into said card reader the type of protocol for communicating with said card is detected by identifying the distribution and/or number of marks (11) on or in said card (28) using a light emitting source (21), the light of which is controlled by said marks and received by light detecting means (24);
- the kind of protocol for communicating with said memory means (in 13) is selected according to said distribution and/or number.

8. Method according to claim 4, **characterized in** that said light emitting source (21) and/or said light detecting means (24) are in array form.

9. Method according to claim 7 or 8, **characterized in** that said light emitting source (21) and said light detecting means (24) are replaced by respective means operating according to an electromechanical principle.
